# EUROPEAN PATENT SPECIFICATION

(11) **EP 4 183 697 B1**
(45) Date of publication and mention of the grant of the patent: **08.10.2025**
(21) Application number: 21842521.3
(22) Date of filing: 13.07.2021
(51) Int. Cl.: B65B 13/02, B65B 13/22

(54) **STEEL STRIP PACKING APPARATUS**
VORRICHTUNG ZUM VERPACKEN VON STAHLBÄNDERN
APPAREIL D'EMBALLAGE DE BANDE D'ACIER

(30) Priority: 15.07.2020 CN 202010678940
(43) Date of publication of application: 24.05.2023
(73) Proprietor: Wuxi Lead Intelligent Equipment Co., Ltd., Wuxi, Jiangsu 214028 (CN)
(72) Inventor: TANG, Zankun, Wuxi, Jiangsu 214028 (CN)
(74) Representative: Rau, Schneck & Hübner Patentanwälte Rechtsanwälte PartGmbB
(86) International application number: PCT/CN2021/105992
(87) International publication number: WO 2022/012519

(56) References cited:
- CN-A- 1 981 405
- CN-A- 102 806 997
- CN-A- 108 539 240
- CN-A- 108 539 240
- CN-A- 110 712 038
- CN-A- 111 056 062
- CN-A- 111 874 306
- CN-A- 111 874 307
- CN-A- 111 874 308
- CN-U- 213 168 683
- DE-B4- 102016 200 496
- JP-A- H08 192 813

## Description

### TECHNICAL FIELD

The present disclosure relates to the field of fuel cell stack manufacturing equipment, and particularly, to a steel strip packing apparatus.

### BACKGROUND

In a process of stacking and assembling a fuel cell stack, it is necessary to pack the fuel cell stack. Traditional packing methods include screw tightening method, braid or steel strip strapping method, and steel strip strapping and welding method. The first two methods require thread locking, which is prone to loosen and seriously affects the sealing, durability and safety of the fuel cell stacks.

The steel strip strapping and welding method is to strap the fuel cell stack with a steel strip and then weld both ends of the steel strip to the lower endplate of the fuel cell stack to avoid loosening. When the steel strip strapping and welding method is used to pack the fuel cell stack, however, it is impossible to guarantee identical tensile forces at both ends of the steel strip, which results in uneven and obviously different stress on the fuel cell stack, and thus affecting the packing effect. CN 1 981 405 A (forming the basis for the preamble of claim 1) discloses an electrical cell packing machine.

### SUMMARY

In view of the above, the present application discloses a steel strip packing apparatus to solve the problem that it is impossible to guarantee tensile force at both ends of the steel strip to be consistent to result in uneven stress on the fuel cell stack and affect the packing effect when the existing steel strip strapping and welding method is used to pack the fuel cell stack.

The present invention provides a steel strip packing apparatus for packing a fuel cell stack with a steel strip, the steel strip having a first end and a second end opposite to the first end, the steel strip packing apparatus including:
a pressurization device including a base and a pressing board disposed opposite to the base, the base having a placement position for disposing the fuel cell stack, the pressing board being configured for pressurizing the fuel cell stack disposed at the placement position;
a steel strip shaping device disposed at the base and configured for guiding the first end of the steel strip from one side of the fuel cell stack to the other side of the fuel cell stack along a first direction, and configured for bending the first end and the second end of the steel strip in a second direction perpendicular to the first direction;
two steel strip tensioning devices disposed at the base, located respectively on two sides of the placement position in the first direction, and configured for tensioning respectively the first end and the second end of the steel strip along the second direction; and
a welding device configured for welding respectively the first end and the second end of the steel strip to the fuel cell stack.

With respect to the above , the guiding effect of the steel strip shaping device is used to achieve threading of the steel strip so that the first end and the second end of the steel strip are respectively located on two sides of the fuel cell stack in the first direction, and the first end and the second end of the steel strip are bent in the second direction, such that the two steel strip tensioning device respectively grasp the first end and the second end of the steel strip and simultaneously tension the steel strip. Since the two steel strip tensioning devices are used to tension the first end and second end of steel strip simultaneously, the tension on the first end and the second end of the steel strip can be made equal by controlling the two steel strip tensioning devices, such that the tensile force on the first end and the second end of the steel strip is consistent, and the force on both sides of the fuel cell stack is consistent, which is beneficial to improve the packing effect.

In one embodiment, the steel strip shaping device includes a steel strip threading mechanism and a profiling mechanism respectively located on two sides of the placement position in the first direction;
the steel strip threading mechanism is configured for guiding the first end of the steel strip to one side of the fuel cell stack facing toward the profiling mechanism so as to bend the first end of the steel strip in the second direction under the action of the profiling mechanism, and the steel strip threading mechanism is further configured for bending the second end of the steel strip in the second direction.

In one embodiment, the steel strip threading mechanism includes a mounting seat, an elevation seat and a clamping assembly, the mounting seat is disposed at the base, the elevation seat is connected to the mounting seat in a way that enables movement along the second direction, and the clamping assembly is disposed at the elevation seat for the steel strip to thread along the first direction and can clamp the steel strip.

In one embodiment, the steel strip threading mechanism further includes a rotating actuator disposed at the elevation seat, the clamping assembly is disposed at a driving end of the rotating actuator, and the rotating actuator is configured for driving the clamping assembly to rotate around a rotating axis parallel to a third direction;
wherein, the third direction is perpendicular to the first direction and the second direction.

In one embodiment, the steel strip threading mechanism further includes a first welding shield disposed at the mounting seat, wherein the first welding shield can move or rotate in a controlled manner, and can press the second end of the steel strip against the fuel cell stack during moving or rotating.

In one embodiment, the profiling mechanism has a profiling passage with an inlet section for inserting the first end of the steel strip and an outlet section in communication with the inlet section, the inlet section extending along the first direction, and the outlet section extending along the second direction.

In one embodiment, the inlet section is in communication with the outlet section via an arc-shaped transition.

In one embodiment, the profiling mechanism includes a mount base as well as a first profiling member and a second profiling member which are oppositely disposed at the mount base, the mount base is disposed at the base, the first profiling member and the second profiling member can get close to or away from each other, and the profiling passage is formed when the first profiling member and the second profiling member get close to and dock with each other.

In one embodiment, the profiling mechanism further includes a second welding shield disposed at the mount base, the second welding shield can move or rotate in a controlled manner, and can press the first end of the steel strip against the fuel cell stack during moving or rotating.

In one embodiment, the profiling mechanism further includes a seat body and a regulating mechanism, the mount base is movably connected to the seat body along the first direction, and the regulating mechanism is connected to the seat body and the mount base for regulating a position of the mount base relative to the seat body along the first direction.

In one embodiment, the steel strip tensioning device includes a fixed base, a mounting frame and a steel strip tensioning mechanism;
the fixed base is disposed on the base, and the mounting frame is disposed on the fixed base and can move in a controlled manner along the first direction relative to the fixed base;
the steel strip tensioning mechanism is disposed at the mounting frame, can move in a controlled manner along the second direction relative to the mounting frame, and can grasp the first end or the second end bent in the second direction.

In one embodiment, the steel strip tensioning mechanism includes a moving seat, a steel strip tensioning seat and a drive assembly; the moving seat is disposed at the mounting frame and is capable of reciprocating movement in a controlled manner relative to the mounting frame along the second direction perpendicular to the first direction; the steel strip tensioning seat is connected to the moving seat in a way that enables reciprocating movement along the first direction, and can lock or release the steel strip during reciprocating movement relative to the moving seat along the first direction; the drive assembly includes a locking actuator, a first connecting rod and a second connecting rod, the locking actuator includes a fixed end and a driving end which is retractable relative to the fixed end, the fixed end is hinged to the steel strip tensioning seat, the driving end is hinged to one end of the connecting rod and one end of the second connecting rod, and the other ends of the connecting rod and the second connecting rod are hinged to the moving seat and the steel strip tensioning seat respectively;
wherein, the retractable end includes a locking position during extending and retracting relative to the fixed end, and when the retractable end is in the locking position, the first connecting rod and the second connecting rod drive the steel strip tensioning seat to move along the first direction so as to lock the steel strip, and the first connecting rod and the second connecting rod are parallel to the first direction.

In one embodiment, the retractable end further includes a releasing position during extending and retracting relative to the fixed end, and when the retractable end is in the releasing position, the first connecting rod and the second connecting rod drive the steel strip tensioning seat to move along the first direction so as to release the steel strip, and the first connecting rod and the second connecting rod are disposed at an angle.

In one embodiment, one side of the steel strip tensioning seat away from the drive assembly is connected with a steel strip plug, and the steel strip plug can be plugged into or pulled out of a plug hole of the steel strip during reciprocating movement of the steel strip tensioning seat along the first direction.

In one embodiment, the steel strip tensioning mechanism further includes a steel strip backup plate connected to the moving seat, and the steel strip backup plate is disposed on one side with a steel strip plug relative to the steel strip tensioning seat, and is provided with a mating hole for the steel strip plug to thread.

In one embodiment, the steel strip tensioning device further includes a translation actuator, and the translation actuator is disposed on the fixed base, is in driving connection with the mounting frame, and is configured for driving the mounting frame to move along the first direction.

In one embodiment, the steel strip tensioning device further includes a locating mechanism disposed at the fixed base, and the locating mechanism can be controllably matched with the mounting frame by location to prevent the mounting frame from moving relative to the fixed base.

In one embodiment, the locating mechanism includes a locating plug and a locating actuator, the locating plug is connected to the fixed base in a way that enables reciprocating movement along the second direction, the mounting frame is opened with a locating hole corresponding to the locating plug, the locating plug can be plugged into or pulled out of the locating hole during reciprocating movement along the second direction, and the locating actuator is disposed on the fixed base and is in driving connection with the locating plug.

In one embodiment, the locating mechanism further includes an eccentric shaft seat, the fixed base is opened with a mounting hole, the eccentric shaft seat is mounted in the mounting hole and has an eccentric shaft hole, and the locating plug is slidably disposed in the eccentric shaft hole of the eccentric shaft seat.

In one embodiment, the steel strip tensioning device further includes a connecting piece, a tension sensor and a steel strip tensioning drive mechanism, the connecting piece is connected to the mounting frame in a way that enables reciprocating movement along the second direction, the moving seat is connected to the connecting piece through the tension sensor, the tension sensor is configured for detecting the tension applied to the steel strip when the steel strip tensioning mechanism moves along the second direction, and the steel strip tensioning drive mechanism is disposed at the mounting frame and is in driving connection with the connecting piece.

### BRIEF DESCRIPTION OF THE DRAWINGS

In order to more clearly illustrate embodiments of the present invention or technical solutions in the prior art, accompanying drawings that need to be used in description of the embodiments or the prior art will be briefly introduced as follows. Obviously, drawings in following description are only the embodiments of the present invention. For those skilled in the art, other drawings can also be obtained according to the disclosed drawings without creative efforts.
FIG. 1 is a structural schematic illustration of a steel strip packing apparatus according to an embodiment of the present invention;
FIG. 2 is a structural schematic illustration of a pressurization device of the steel strip packing apparatus shown in FIG. 1;
FIG. 3 is a steel strip shaping device of the steel strip packing apparatus shown in FIG. 1;
FIG. 4 is a front view of the steel strip threading mechanism of the steel strip shaping device shown in FIG. 3;
FIG. 5 is a side view of the steel strip threading mechanism shown in FIG. 4;
FIG. 6 is a front view of a profiling mechanism of the steel strip shaping device shown in FIG. 3;
FIG. 7 is a side view of the profiling mechanism of the steel strip shaping device shown in FIG. 6;
FIG. 8 is a schematic illustration of functional relationship between a steel strip and a steel strip tensioning device of the steel strip packing apparatus shown in FIG. 1;
FIG. 9 is a schematic illustration of the functional relationship between the steel strip and the steel strip tensioning device shown in FIG. 8 in another view;
FIG. 10 is a front view of the steel strip tensioning device shown in FIG. 8;
FIG. 11 is a partial enlarged view at a locating mechanism of the steel strip tensioning device shown in FIG. 8;
FIG. 12 is a structural schematic illustration (releasing position) of the steel strip tensioning mechanism of the steel strip tensioning device shown in FIG. 8;
FIG. 13 is a structural schematic illustration (locking position) of the steel strip tensioning mechanism of the steel strip tensioning device shown in FIG. 8;
FIG. 14 is a structural schematic illustration of a welding device of the steel strip packing apparatus shown in FIG. 1.

### DETAILED DESCRIPTION

The technical solutions in the embodiments of the present invention will be clearly and completely described below in conjunction with the accompanying drawings in the embodiments of the present invention. Obviously, the described embodiments are only a part of the embodiments of the present invention, and not all of them.

In addition, terms "first" and "second" are only used for descriptive purposes, and should not be understood as indicating or implying relative importance or implying a number of indicated technical features. Therefore, features defined as "first", "second" may expressly or implicitly include at least one of those features. In the description of the present application, "plurality" means at least two, such as two, three, etc., unless expressly and specifically defined otherwise.

In the present application, unless otherwise expressly specified and limited, terms "mounted", "be connected with", "be connected to", "fixed" and other terms should be interpreted in a broad sense, for example, it can be a fixed connection, a detachable connection, or an integrated; it can be a mechanical connection or an electrical connection; it can be a direct connection or an indirect connection through an intermediate medium; it may be connection within the two elements or an interaction relationship between the two elements, unless explicitly defined otherwise. For those of ordinary skill in the art, the specific meanings of the above terms in the present application can be understood according to specific situations.

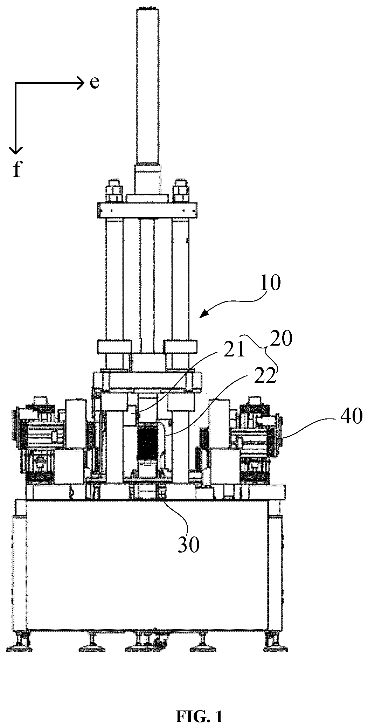

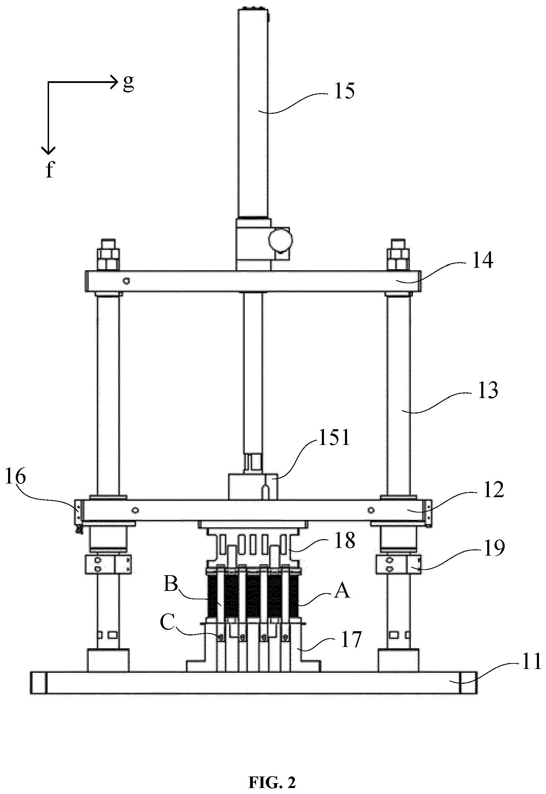

Referring to FIGS. 1 and 2, an embodiment of the present application provides a steel strip packing apparatus for packing a fuel cell stack with a steel strip, that is, first strapping the fuel cell stack A with the steel strip B, and then welding both ends of the steel strip B to the lower endplate of the fuel cell stack A. Wherein, the steel strip B has a first end and a second end opposite to the first end. The steel strip packing apparatus includes a pressurization device 10, a steel strip shaping device 20, two steel strip tensioning device 30 and a welding device 40.

The pressurization device 10 includes a base 11 and a pressing board 12 disposed opposite to the base 11. The base 11 is provided with a placement position for disposing the fuel cell stack A, and the pressing board 12 is configured for pressurizing the fuel cell stack A disposed at the placement position. The steel strip shaping device 20 is disposed at the base 11 for guiding a first end of the steel strip B from one side of the fuel cell stack A to the other side of the fuel cell stack A along a first direction e (generally, the first end of the steel strip B passes between the top of the fuel cell stack A and the pressing board 12, such that the first end and the second end of the steel strip B are respectively located on opposite sides of the fuel cell stack A in the first direction e), and for bending the first end and the second end of the steel strip B in a second direction f perpendicular to the first direction e. The two steel strip tensioning devices 30 are disposed at the base 11, and are located on two sides of the placement position in the first direction e respectively. The two steel strip tensioning devices 30 are configured for tensioning the first end and the second end of the steel strip B along the second direction f, respectively. The welding device 40 is configured for welding the first end and the second end of the steel strip B to the lower endplate of the fuel cell stack A.

With respect to the above steel strip packing apparatus, in the actual packing work, the fuel cell stack is disposed at the placement position on the base 11 and the pressing board 12 of the pressurization device 10 is pressed down to pressurize the fuel cell stack A. The steel strip B is conveyed to the steel strip shaping device 20, and the first end of the steel strip B runs from one side of the fuel cell stack A through the top of the fuel cell stack A to the other side of the fuel cell stack A along the first direction e under the guidance of the steel strip shaping device 20, and both the first end and the second end of steel strip B are bent in the second direction f by the steel strip shaping device 20. Then, the two steel strip tensioning devices 30 grasp the first end and second end of steel strip B, respectively, and simultaneously tension steel strip B along the second direction f. Finally, the welding device 40 welds the first end and second end of steel strip B to the lower endplate of fuel cell stack A, respectively.

In this way, the guiding effect of the steel strip shaping device 20 is used to achieve threading of the steel strip so that the first end and the second end of the steel strip B are respectively located on two sides of the fuel cell stack A in the first direction e, and the first end and the second end B of the steel strip B are bent in the second direction f, such that the two steel strip tensioning device 30 respectively grasp the first end and the second end of the steel strip B and simultaneously tension the steel strip B. Since the two steel strip tensioning devices 30 are used to tension the first end and second end of steel strip B simultaneously, the tension on the first end and the second end of the steel strip B can be made equal by controlling the two steel strip tensioning device 30, such that the tensile force on the first end and the second end of the steel strip B is consistent, and the force on both sides of the fuel cell stack A is consistent, which is beneficial to improve the packing effect.

It should be noted that the steel strip B may be conveyed by the steel strip conveying apparatus (not shown) along the first direction e, and the steel strip shaping device 20 guides the steel strip B conveyed along the first direction e, such that the first end of the steel strip B runs from the top of the fuel cell stack A to the other side of the fuel cell stack A. The steel strip conveying apparatus may adopt a prior art conveying apparatus, so it will not be described herein.

In an embodiment of the present application, the pressurization device 10 further includes a guide pillar 13, a mount plate 14, and a pressurization actuator 15. One end of the guide pillar 13 is connected to the side of the base 11 having the placement position, and the other end of the guide pillar 13 is connected to the mount plate 14. The pressing board 12 is slidably connected to the guide pillar 13, and is located between the mount plate 14 and the base 11. The pressurization actuator 15 is disposed at the mount plate 14 and is in driving connection with the pressing board 12, so as to drive the pressing board 12 to move along the guide pillar 13 to pressurize the fuel cell stack A. Alternatively, the pressurization actuator 15 may be a servo hydraulic cylinder or a servo electric cylinder, which is not limited herein. It should be noted that the longitudinal direction of the guide pillar 13 is parallel to the second direction f. A plurality of guide pillars 13 may be included, and they may make the pressurization of the pressing board 12 on the fuel cell stack A more stable and reliable.

Further, the pressurization device 10 further includes a pressure sensor 151 which is connected between the pressing board 12 and the pressurization actuator 15 to detect and obtain the pressure applied to the fuel cell stack A by the pressing board 12.

Further, a plurality of ranging sensors 16 are mounted on the pressing board 12 for simultaneously detecting the distance between the pressing board 12 and the base 11 so as to calculate parallelism between the pressing board 12 and the base 11 according to the distance value measured by each ranging sensor 16, therefore monitoring the pressing quality in real time during pressurizing the fuel cell stack A.

Further, the pressurization device 10 includes a limit coupling 19, which is fixedly connected to the guide pillar 13 and is located between the pressing board 12 and the base 11. The limit coupling 19 is used to limit the pressing board 12 to prevent the pressing board 12 from crushing the fuel cell stack A or other components.

In a specific embodiment, the pressurization device 10 also includes a fuel cell stack supporting seat 17 and a fuel cell stack pressurizing block 18. The fuel cell stack supporting seat 17 is fixedly connected to a side of the base 11 facing toward the pressing board 12, so as to support the fuel cell stack A. The fuel cell stack pressurizing block 18 is fixedly connected to a side of the pressing board 12 facing toward the base 11, and corresponds to the fuel cell stack supporting seat 17 for pressurizing the fuel cell stack A. It should be noted that the fuel cell stack pressurizing block 18 is opened with a through groove passing through the fuel cell stack pressurizing block 18 along the first direction e for the steel strip B to pass through.

As shown in FIGS. 1-3, in the embodiment of the present application, the steel strip shaping device 20 includes a steel strip threading mechanism 21 and a profiling mechanism 22 respectively located on two sides of the fuel cell stack A at the placement position in the first direction e. The steel strip threading mechanism 21 is configured for guiding the first end of the steel strip B to one side of the fuel cell stack A facing toward the profiling mechanism 22 so as to bend it in the second direction f under the action of the profiling mechanism 22, and the steel strip threading mechanism 21 is further configured for bending the second end of the steel strip B in the second direction f. In this way, the threading of the steel strip is realized by the guidance of the steel strip threading mechanism 21 of the steel strip shaping device 20, such that the first end and the second end of the steel strip A are located on two sides of the fuel cell stack A in the first direction e, and the first end of the steel strip B is bent in the second direction f under the action of the profiling mechanism 22 during the threading of the steel strip, such that the corresponding steel strip tensioning device 30 can tension the first end. After the threading of the steel strip, the second end of the steel strip B is bent in the second direction f by the steel strip threading mechanism 21 such that the corresponding steel strip tensioning device 30 can tension the second end. The whole process is highly automated without human involvement, and is beneficial to improving the production efficiency.

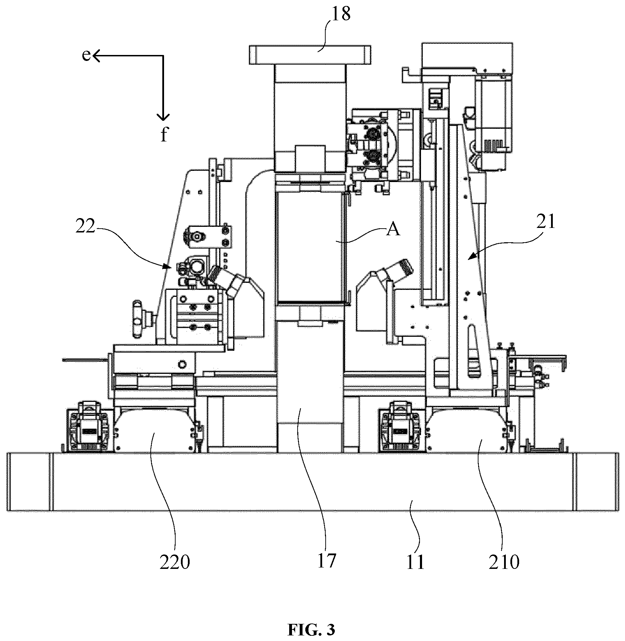

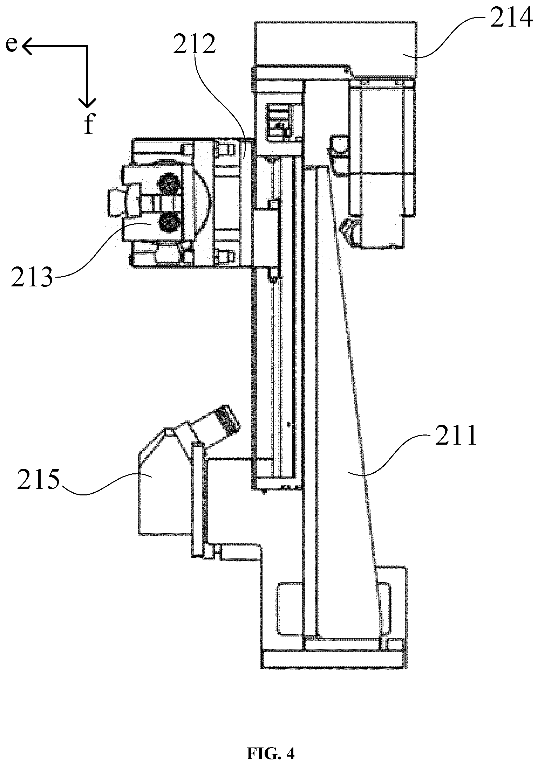

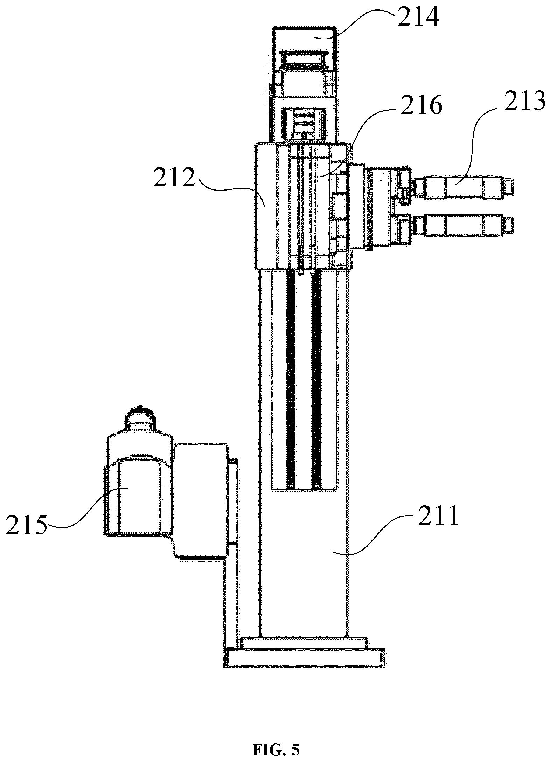

As shown in FIGS. 3-5, in some embodiments, the steel strip threading mechanism 21 includes a mounting seat 211, an elevation seat 212 and a clamping assembly 213. The mounting seat 211 is disposed at the base 11, and the elevation seat 212 is connected to the mounting seat 212 in a way that the former is capable of reciprocating movement along the second direction f. The clamping assembly 213 is disposed at the elevation seat 212 for the steel strip B to thread along the first direction e and can clamp the steel strip B. In this way, the steel strip B is threaded through the clamping assembly 213 during conveying along the first direction e (at this time, the clamping assembly 213 does not clamp the steel strip B, but allows the steel strip B to continue conveying along the first direction e, and the clamping assembly 213 only serves as a guide), the first end of the steel strip B runs through the top of the fuel cell stack A to the other side of the fuel cell stack A under the guidance of the clamping assembly 213, and is bent in the second direction f under the action of the profiling mechanism 22, so as to be grasped and fixed by the corresponding steel tensioning device 30. Then, the clamping assembly 213 clamps the steel strip B, and controls the elevation seat 212 to move along the second direction f, such that the second end of the steel strip B is bent in the second direction f so as to be grasped and fixed by the corresponding steel strip tensioning device 30.

In a specific embodiment, the steel strip threading mechanism 21 further includes an elevation drive assembly 214, which is disposed at the mounting seat 211 and is in driving connection with the elevation seat 212, so as to drive the elevation seat 212 to reciprocate along the second direction f. Alternatively, the elevation drive assembly 214 may adopt a linear drive module in the prior art, which is not limited herein.

In a specific embodiment, the steel strip threading mechanism 21 further includes a rotating actuator 216 disposed at the elevation seat 212, the clamping assembly 213 is disposed at a driving end of the rotating actuator 216, and the rotating actuator 216 is configured for driving the clamping assembly 213 to rotate around an axis of rotation parallel to the third direction g. Wherein, the third direction g is perpendicular to the first direction e and the second direction f described above. In this way, when bending the second end of the steel strip B, the clamping assembly 213 clamps the steel strip B, and the rotating actuator 216 drives the clamping assembly 213 to rotate around an axis of rotation parallel to the third direction g while the elevation seat 212 is controlled to move in the second direction f, so as to ensure that the second end of steel strip B bends 90° to be parallel to the second direction f, which facilitates the corresponding steel strip tensioning device 30 to grasp the second end of steel strip B and tension the steel strip B along the second direction f. With the movement of the elevation seat 212 along the second direction f and the rotation of the clamping assembly 213 around the axis of rotation parallel to the third direction g, the bending of the second end of the steel strip B in the second direction f is smooth and reliable. Alternatively, the rotating actuator 216 can be a rotating cylinder.

It should be noted that the clamping assembly 213 may be constructed with a cylinder and two clamping rollers. Of course, in other embodiments, the clamping assembly 213 may also adopt other types of clamping structures, which is not limited herein.

In a specific embodiment, the steel strip threading mechanism 21 further includes a first welding shield 215 disposed at the mounting seat 211. The welding shield 215 can move or rotate in a controlled manner, and can press the second end of the steel strip B against the fuel cell stack A during moving or rotating, such that the steel strip B and fuel cell stack A fit tightly to improve welding effect while the first welding shield 215 also protects the fuel cell stack A to avoid damage to the fuel cell stack A due to welding slag spattered during welding. In one embodiment, the steel strip threading mechanism 21 further includes a first actuator. The first welding shield 215 can be movably connected to the mounting seat 211, and the first actuator is disposed at the mounting seat 211 and is in driving connection with the first welding shield 215 so as to drive the first welding shield 215 to move close to or away from the fuel cell stack A. Before welding, the first actuator drives the first welding shield 215 to move close to the fuel cell stack A, such that the first welding shield 215 presses the second end of the steel strip B against the fuel cell stack. After welding is complete, the first actuator drives the first welding shield 215 back (i.e., moving away from fuel cell stack A). Alternatively, the first actuator may be a cylinder.

In a specific embodiment, the steel strip threading mechanism 21 further includes a first movement drive assembly 210 disposed at the base 11, the mounting seat 211 is disposed at the first movement drive assembly 210, the first movement drive assembly 210 is configured for driving the mounting seat 211 to reciprocate along the third direction g so as to bring the clamping assembly 213 into or out of the first station as the mounting seat 211 moves along the third direction g. The first station is located on the side of the fuel cell stack A in the first direction e to guide the steel strip B and clamp the steel strip B. Alternatively, the first movement drive assembly 210 can adopt a linear movement module in the prior art, which is not limited herein.

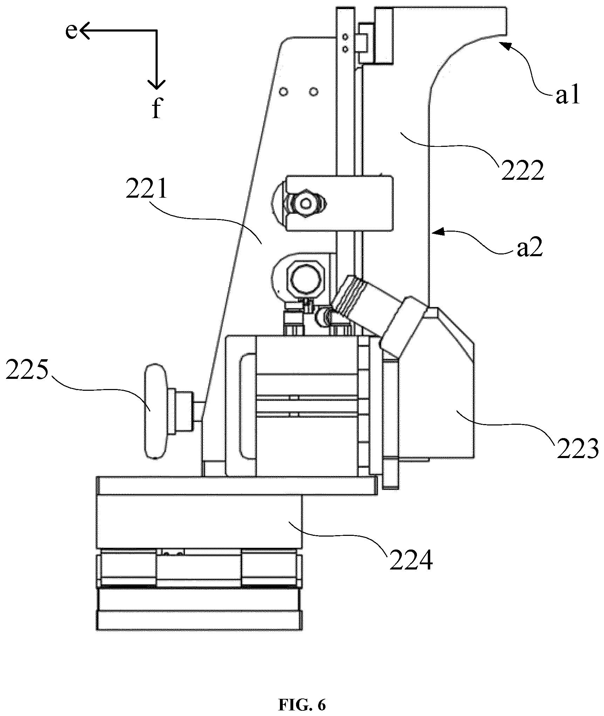

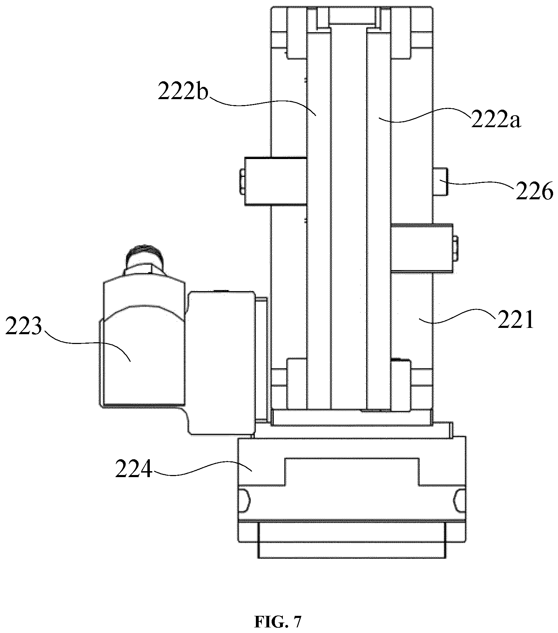

As shown in FIGS. 3, 6 and 7, in some embodiments, the profiling mechanism 22 has a profiling passage with an inlet section a1 for inserting the first end of the steel strip B and an outlet section a2 in communication with the inlet section a1. The inlet section a1 extends along the first direction 3, and the outlet section a2 extends along the second direction f. In this way, the first end of the steel strip B runs through the fuel cell stack A under the guidance of the steel strip threading mechanism 21, is inserted into the profiling passage from the inlet section a1. and moves to the outlet section a2 along the profiling passage, so that the first end of the steel strip B is bent to be parallel to the outlet section a2, that is, parallel to the second direction f, which facilitates grasping and tensioning of the corresponding steel strip tensioning device 30. Preferably, the transition between inlet section a1 and outlet section a2 is circular.

In a specific embodiment, the profiling mechanism 22 includes a mount base 221 as well as a first profiling member 222a and a second profiling member 222b which are oppositely disposed at the mount base 221. The first profiling member 222a and the second profiling member 222b can get close to or away from each other, and the above profiling passage is formed when the first profiling member 222a and the second profiling member 222b get close to and dock with each other. In this way, when it is necessary to bend the first end of the steel strip B, the first profiling member 222a and the second profiling member 222b are getting close to each other until they dock with each other, such that the first end of the steel strip B is inserted from the inlet section a1 to the outlet section a2 of the profiling passage, thereby bending the first end of the steel strip B in the second direction f. When bending the first end of the steel strip B is completed, the first profiling member 222a and the second profiling member 222b are getting away from each other to be opened, the influence of the first profiling member 222a and the second profiling member 222b on the tightening of the steel strip B is avoided when the corresponding steel strip tensioning device 30 tensions the second end of steel strip B. Alternatively, a sliding rail is disposed on the mount base 221, and the first profiling member 222a and the second profiling member 222b are slidably disposed on the sliding rail. In one embodiment, the first profiling member 222a and the second profiling member 222b may be driven by the third actuator 226 to slide along the sliding rail. Alternatively, the third actuator 226 may be a cylinder.

Further, the first profiling member 222a and the second profiling member 222b are disposed at the mount base 221 along the third direction g, and at least one of them is capable of reciprocating movement relative to the mount base 221 along the third direction g. At least one of the first profile member 222a and the second profile member 222b may get close to or away from each other during reciprocation along the third direction g.

In a specific embodiment, the profiling mechanism further includes a seat body 224 and a regulating mechanism 225. The seat body 224 is disposed at the base 11, and the mount base 221 is connected to the seat body 224 along the first direction e in a reciprocating manner. The regulating mechanism 225 is fitted between the seat body 224 and the mount base 221 to regulate the position of the mount base 221 relative to the seat body 224 in the first direction e, thereby adapting to fuel cell stack A with different sizes and specifications and improving the applicability of the steel strip packaging apparatus. More specifically, the regulating mechanism includes a frame and a regulating member, wherein the frame is fixedly connected to the seat body 224, the regulating member is rotatably connected to the frame around its own axis, and one end of the regulating member is screwed to the mount base 221. In this way, the mount base 221 can be driven to reciprocate along the first direction e by screwing the regulating member, so as to regulate the position of the mount base 221.

In a specific embodiment, the profiling mechanism 22 further includes a second welding shield 223 disposed at the mount base 221, and the second welding shield 223 can move or rotate in a controlled manner and can press the first end of the steel strip B against the fuel cell stack A during moving or rotating, such that the first end of the steel strip B fit tightly to improve welding effect while the second welding shield 223 also protects the fuel cell stack A to avoid damage to the fuel cell stack A due to welding slag spattered during welding. In one embodiment, the profiling mechanism 22 further includes a second actuator. The second welding shield 223 can be movably connected to the mounting seat 211, and the second actuator is disposed at the mounting seat 211 and is in driving connection with the second welding shield 223 so as to drive the second welding shield 223 to move close to or away from the fuel cell stack A. Before welding, the second actuator drives the second welding shield 223 to move close to the fuel cell stack A, such that the second welding shield 223 presses the first end of the steel strip B against the fuel cell stack A. After welding is complete, the second actuator drives the second welding shield 223 back (i.e., moving away from fuel cell stack A). Alternatively, the second actuator may be a cylinder.

In a specific embodiment, the profiling mechanism 22 further includes a second movement drive assembly 220 disposed at the base 11, the mounting seat 211 is disposed at the second movement drive assembly 220, the second movement drive assembly 220 is configured for driving the mounting seat 211 to reciprocate along the third direction g so as to bring the profiling member 222a and the profiling member 222b into or out of the second station as the mounting seat 211 reciprocates along the third direction g. The second station is located on the side of the fuel cell stack A in the first direction e (the second station and the first station are respectively located on two sides of the fuel cell stack A in the first direction e) such that the first end of the steel strip B passing through the top of the fuel cell stack A is inserted into the profiling passage formed by the first profiling members 222a and the second profiling member 222b. Alternatively, the second movement drive assembly 220 can adopt a linear movement module in the prior art, which is not limited herein.

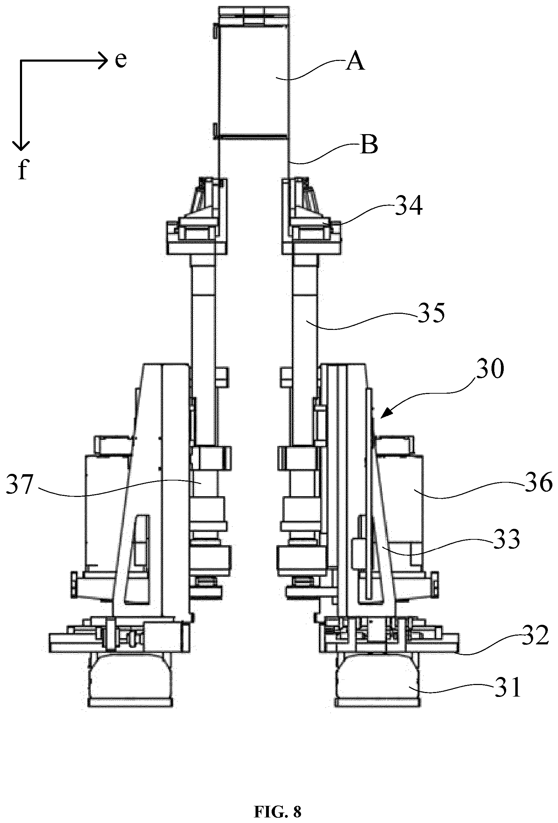

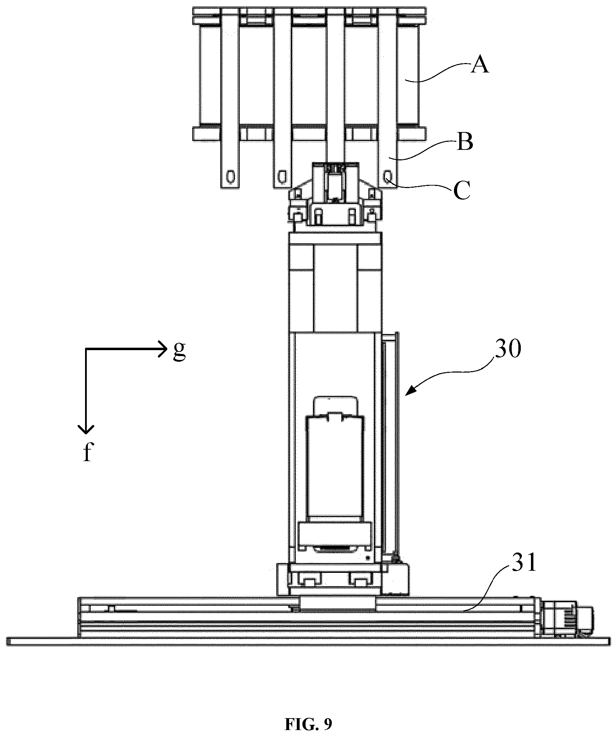

As shown in FIGS. 8-10, in the embodiment of the present application, the steel strip tensioning device 30 includes a fixed base 32, a mounting frame 33, and a steel strip tensioning mechanism 34. The fixed base 32 is disposed at the base 11, and the mounting frame 33 is disposed at the fixed base 32 and is capable of reciprocating movement along the first direction e in a controlled way relative to the fixed base 32. The steel strip tensioning mechanism 34 is disposed at the mounting frame 33 and is capable of reciprocating movement along the second direction f relative to the mounting frame 33, and the steel strip tensioning mechanism 34 can grasp a first end or a second end of the steel strip B bent in the second direction f. In this way, when the first end and the second end of the steel strip B are bent in the second direction f, the steel strip tensioning mechanisms 34 of the two steel strip tensioning device 30 move along the second direction f toward the first end and the second end of the steel strip B until the first end and the second end of the steel strip B are grasped, and then returns in the second direction f to tension the first end and the second end of the steel strip B. The steel strip tensioning mechanism 34 moves along with the mounting frame 33 toward the fuel cell stack A in the first direction e after being tensioned into position, such that the first end and the second end of the steel strip B fit tightly to the fuel cell stack A to ensure welding quality.

In a specific embodiment, the steel strip tensioning device 30 further includes a third movement drive assembly 31 which is disposed at the base 11, and the fixed base 32 is in driving connection with the third movement drive assembly 31. The third movement drive assembly 31 can drive the fixed base 32 to reciprocate along the third direction, thereby bringing the steel strip tensioning mechanism 34 into or out of the third station for pulling the first end or the second end of the steel strip B. When the steel strip B needs to be pulled, the third movement drive assembly 31 can drive the fixed base 32 to move along the third direction, thereby bringing the steel strip tensioning mechanism 34 into the third station to prepare for the first end or the second end of the steel strip B. When the pulling of the steel strip B is completed, the third movement drive assembly 31 can drive the fixed base to return along the third direction, thereby bringing the steel strip tensioning mechanism 34 out of the third station and thus providing workspace for other mechanisms (such as the steel strip threading mechanism 21 and the profiling mechanism 22).

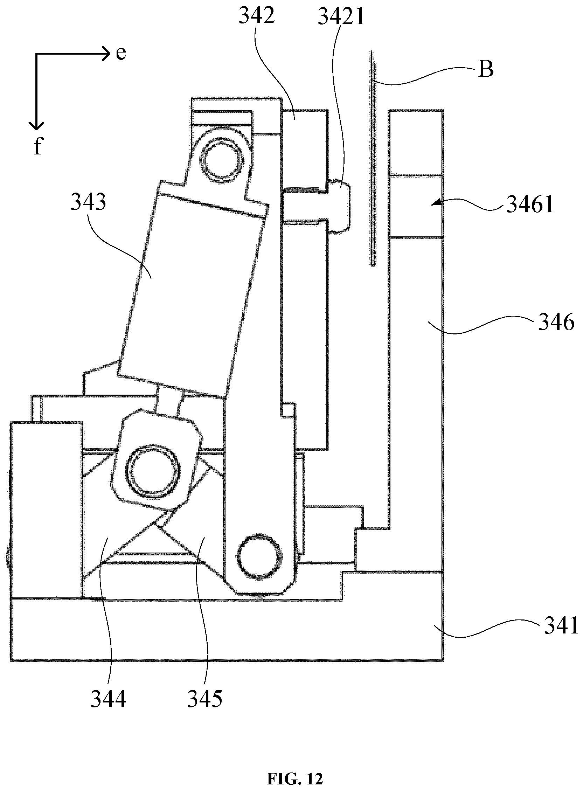

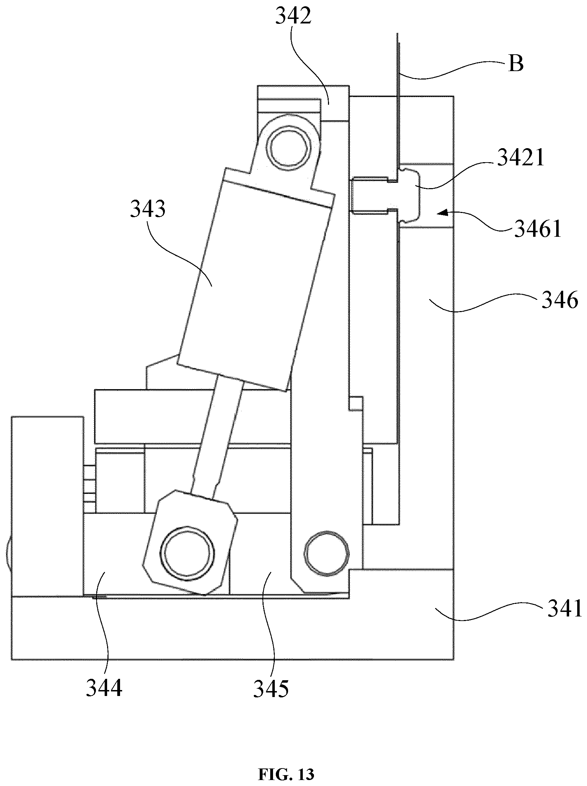

As shown in FIGS. 12 and 13, in some embodiments, the steel strip tensioning mechanism 34 includes a moving seat 341, a steel strip tensioning seat 342, and a drive assembly. The moving seat 341 is disposed at the mounting frame 33 and is capable of reciprocating movement along the second direction f in a controlled way relative to the mounting frame 33. Since the mounting frame 33 is capable of reciprocating movement along the first direction e relative to the fixed base 32, the moving seat 341 is capable of reciprocating movement along the first direction e and the second direction f in a controlled way relative to the fixed base 32. The steel strip tensioning seat 342 can be connected to the moving seat 341 in a way that enables reciprocating movement along the first direction e, and can lock or release the steel strip B during the reciprocating movement in the first direction e relative to the moving seat 341. The drive assembly includes a locking actuator 343, a first connecting rod 344, and a second connecting rod 345. The locking actuator 343 includes a fixed end and a driving end that is retractable with respect to the fixed end. The fixed end is hinged to the steel strip tensioning seat 342, the driving end is hinged to one end of the first connecting rod 344 and one end of the second connecting rod 345, and the other ends of the first connecting rod 344 and the other end of the second connecting rod 345 are hinged to the moving seat 341 and the steel strip tensioning seat 342, respectively.

Wherein, the retractable end includes a locking position (see FIG. 13) during extending and retracting relative to the fixed end. When the retractable end is in the locking position, the first connecting rod 344 and the second connecting rod 345 drive the steel strip tensioning seat 342 to move to the first end or the second end of the locking steel strip B along the first direction e, and the first connecting rod 344 and the second connecting rod 345 are parallel to the first direction e and are in a self-locking state.

In this way, when the first end and the second end of the steel strip B are bent in the second direction f, movement of the moving seat 341 along the second direction f enables the steel strip tensioning seat 342 to move to the first end or the second end of the steel strip B. The retractable end of the locking actuator 343 elongates relative to the fixed end, such that the steel strip tensioning seat 342 is pushed to move in the first direction e by the first connecting rod 344 and the second connecting rod 345 until the first end or the second end of the steel strip B is locked. The moving seat 341 returns along the second direction f so as to tension the steel strip B. When the steel strip B is tensioned into position, the moving seat 341 moves along with the mounting frame 33 in the first direction e toward the fuel cell stack A, such that the first end and the second end of the steel strip B fit tightly to the fuel cell stack A so as to improve welding quality. Then, the welding device 40 welds the first end and the second end of the steel strip B to the fuel cell stack A, respectively. After welding is complete, the retractable end of the locking actuator 343 retracts relative to the fixed end, such that the steel strip tensioning seat 342 is pulled by the first connecting rod 344 and the second connecting rod 345 to move in the first direction e until the first end and the second end of the steel strip B is released.

When the retractable end is in the locking position, the first connecting rod 344 and the second connecting rod 345 drive the steel strip tensioning seat 342 to move along the first direction e until the first end or the second end of the steel strip B is locked, and the first connecting rod 344 and the second connecting rod 345 are parallel to the first direction e and are in a self-locking state. Then, the moving seat 341 moves toward the fuel cell stack A along the first direction e along with the mounting frame 33, such that during the process of the first end or the second end of the steel strip B fitting tightly with the fuel cell stack A, neither the component force of the tension on the steel strip B along the first direction e (i.e., horizontal component force) nor the resilience force of the steel strip can push the first connecting rod 344 and the second connecting rod 345 to rotate since the first connecting rod 344 and the second connecting rod 345 are parallel to the first direction e, such that the first connecting rod 344 and the second connecting rod 345 always maintain the self-locking state. That is to say, with the self-locking of the first connecting rod 344 and the second connecting rod 305, the steel strip tensioning seat 342 is prevented from being pushed to move along the first direction e by the component force of the tension on the steel strip B along the first direction e and the resilient force of the steel strip, such that a gap is generated between the steel strip B and the fuel cell stack A, thereby causing poor welding and affecting welding effect.

In a specific embodiment, the retractable end further includes a releasing position (see FIG. 12) during extending and retracting relative to the fixed end, and when the retractable end is in the releasing position, the first connecting rod 344 and the second connecting rod 345 drive the steel strip tensioning seat 342 to move along the first direction e until the first end or the second end of the steel strip B is released, and the first connecting rod 344 and the second connecting rod 345 are disposed at an angle, that is, neither of them is parallel to the first direction e.

Further, the side of the steel strip tensioning seat 342 facing away from the drive assembly is connected with a steel strip plug 3421 which can be plugged into or pulled out of a plug hole C at the first end or the second end of the steel strip B during the reciprocating movement of the steel strip tensioning seat 342 along the first direction e. When the steel strip tensioning seat 342 is moved along the first direction e to the locking position, the steel strip plug 3421 is inserted into the plug hole C at the first end or the second end of the steel strip B so as to lock the first end or the second end of the steel strip B. When the steel strip tensioning seat 342 is moved to the releasing position along the first direction e, the steel strip plug 3421 is pulled out of the plug hole C at the first end or the second end of the steel strip B, and at this time, the first end and the second end of the steel strip B are separated from the steel strip tensioning seat 342.

Further, the steel strip tensioning mechanism 34 further includes a steel strip backup plate 346 connected to the moving seat 341. The steel strip backup plate 346 is disposed on one side with the steel strip plug 3421 with respect to the steel strip tensioning seat 342, and has a mating hole 3461 for the steel strip plug 3421 to thread.

In this way, when the first end and the second end of the steel strip B are bent in the second direction f, the moving seat 341 moves close to the first end or the second end of the steel strip B along the second direction f, such that the first end or the second end of the steel strip B is inserted between the steel strip tensioning seat 342 and the steel strip backup plate 346. The retractable end of the locking actuator 343 elongates relative to the fixed end, such that the steel strip tensioning seat 342 is pushed by the first connecting rod 344 and the second connecting rod 345 to move along a first direction e toward the steel strip backup plate 346, until the steel strip plug 3421 penetrates the plug hole C at the first end or the second end of the steel strip B and is inserted into the mating hole 3461 of the steel strip backup plate 346, thereby locking the first end or the second end of the steel strip B. The moving seat 341 returns along the second direction f, thereby tensioning the steel strip B. When the steel strip B is tensioned into position, the moving seat 341 moves with the mounting frame 33 toward the fuel cell stack A along the first direction e, such that the first end and the second end of the steel strip B fit tightly to the fuel cell stack A, therefore improving welding quality. Then, the welding device 40 welds the first end and the second end of the steel strip B to the fuel cell stack A, respectively. After welding is complete, the retractable end of the locking actuator 343 retracts relative to the fixed end, such that the steel strip tensioning seat 342 is pulled by the first connecting rod 344 and the second connecting rod 345 to move away from the steel strip backup plate 346 along the first direction e, such that the steel strip plug 3421 is pulled out of the mating hole 3461 of the steel strip backup plate 346 and the plug hole C at the first end or the second end of the steel strip B in turn, that is, releasing the first end or the second end of the steel strip B.

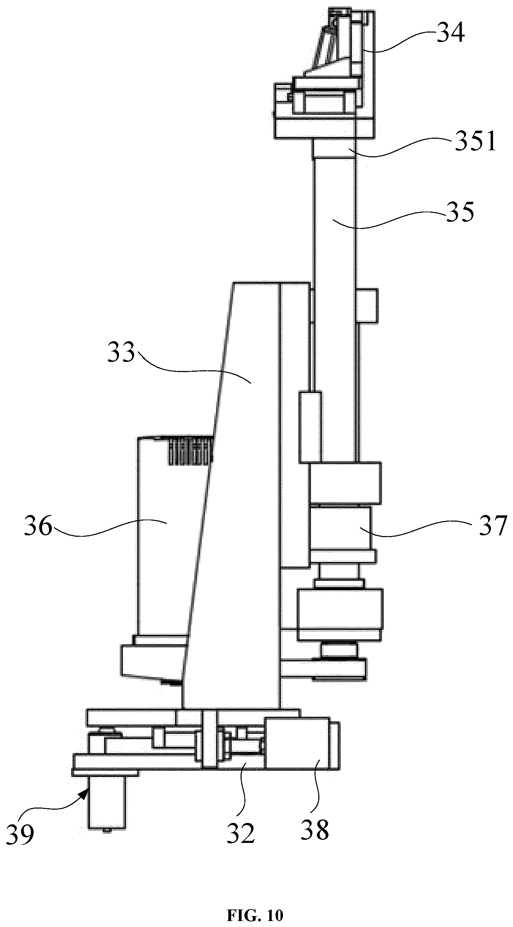

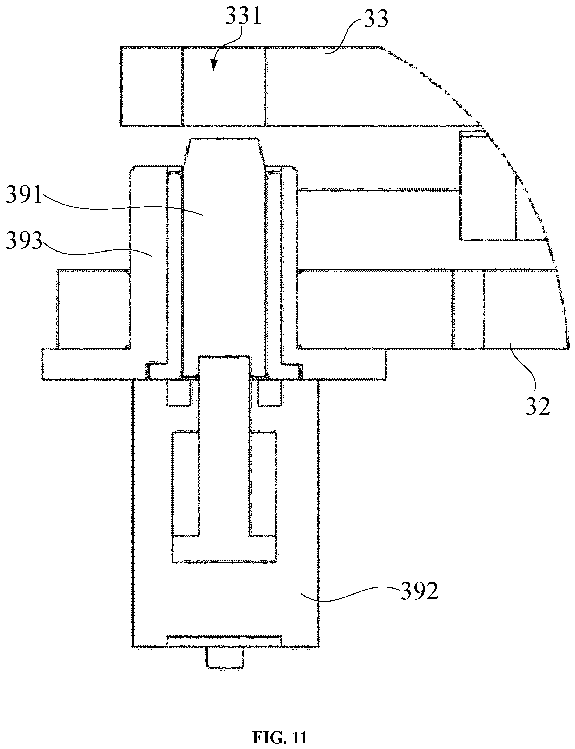

As shown in FIGS. 10-11, in some embodiment, the steel strip tensioning device 30 further includes a translation actuator 38, which is disposed at the fixed base 32, and is in driving connection with the mounting frame 33 so as to drive the mounting frame 33 to reciprocate along the first direction e relative to the fixed base 32. Alternatively, the translation actuator 38 may be a cylinder.

In a specific embodiment, the steel strip tensioning device 30 further includes a locating mechanism 39 disposed at the fixed base 32. The locating mechanism 39 can be controllably matched with the mounting frame 33 by location to limit the movement of the mounting frame 33 relative to the fixed base 32 along the first direction e. In this way, when the moving seat 341 moves with the mounting frame 33 along the first direction e toward the fuel cell stack A to enable the first end or the second end of the steel strip B fits tightly to the fuel cell stack A, the locating mechanism 39 can be controllably matched with the mounting frame 33 by location, so as to prevent a gap from being generated between the first end or the second end of the steel strip B and the fuel cell stack A due to movement of the mounting frame 33 relative to the fixed base 32 under the component force of the tension on the steel strip B along the first direction e (i.e., horizontal component force) and the resilience force of the steel strip. With the self-locking of the first connecting rod 344 and the second connecting rod 345 as well as the locating mechanism 39, it is possible to ensure that the first end or the second end of the steel strip B fits tightly to the fuel cell stack A before welding, therefore ensuring welding effect.

Further, the locating mechanism 39 includes a locating plug 391 and a locating actuator 392. The locating plug 391 is connected to the fixed base 32 so as to be capable of reciprocating movement along the second direction f, and the mounting frame 33 is provided with a locating hole 331 corresponding to the locating plug 391. The locating plug 391 can be plugged into or pulled out of the locating hole 331 during the reciprocating movement in the second direction f. The locating actuator 392 is disposed in the fixed base 32, and is in transmission connection with the locating plug 391, so as to drive the locating plug 391 to reciprocate along the second direction f to be plugged into or pulled out of the locating hole 331.

Further, the locating mechanism 39 includes a locating plug 391 and a locating actuator 392. The locating plug 391 can be connected to the fixed base 32 in a way that enables reciprocating movement, and the mounting frame 33 is opened with a locating hole 331 corresponding to the locating plug 391. The locating plug 391 can be plugged into or pulled out of the locating hole 331 during reciprocating movement along the second direction f. The locating actuator 392 is disposed at the fixed base 32, and is in driving connection with the locating plug 391, so as to drive the locating plug 391 to reciprocate along the second direction f to be plugged into or pulled out of the locating hole 331.

Further, the locating mechanism 39 further includes an eccentric shaft seat 393 which is opened with a mounting hole. The eccentric shaft seat 393 is fixedly mounted in the mounting hole of the fixed base 32, and has an eccentric shaft hole. The locating plug 391 is slidably disposed in the eccentric shaft hole of the eccentric shaft seat 393. More specifically, one end of the locating plug 391 is in driving connection with the locating actuator 392 and is driven to slide by the locating actuator 392 along the eccentric shaft hole, such that the other end of the locating plug 391 can be plugged into or pulled out of the locating hole 331. In this way, the position of the locating plug 391 can be adjusted by changing the installation orientation of the eccentric shaft seat 393, so as to finely adjust the positioning position of the mounting frame 33 and further improve the applicability of the device. It can be understood that the fine adjustment range of the positioning position of the mounting frame 33 is twice the eccentric distance of the eccentric shaft seat 393.

In some embodiments, the steel strip tensioning device 30 further includes a tension sensor 351 which is configured for detecting the tension on the first end or the second end of the steel strip B applied by the steel strip tensioning mechanism 34 so as to facilitate accurate control of the tension on the steel strip B, such that tensile force of the first end and second end of steel strip B remains consistent.

In a specific embodiment, the steel strip tensioning device 30 further includes a connecting piece 35 and a steel strip tensioning drive mechanism. The connecting piece 35 can be connected to the mounting frame 33 in a way that enables reciprocating movement along the second direction f, and the moving seat 341 is connected to the connecting piece 35 through the tension sensor 351, and the tension sensor 351 is configured for detecting the tension on the first end or the second end of the steel strip B applied during the movement of the steel strip tensioning mechanism 34 along the second direction f. The steel strip tensioning drive mechanism is disposed at the mounting frame 33, and is in driving connection with the connecting piece 35 so as to drive the connecting piece 35 to reciprocate along the second direction f.

Further, the steel strip tensioning drive mechanism includes a steel strip tensioning actuator 36, a synchronous pulley assembly and a ball screw assembly 37. The steel strip tensioning actuator 36 is mounted at the mounting frame 33, the ball screw assembly 37 is mounted at the mounting frame 33, the output end of the ball screw assembly 37 is fixedly connected to the connecting piece 35, and the synchronous pulley assembly is in driving connection between the steel strip tensioning actuator 36 and the input end of the ball screw assembly 37, so as to convert the rotary motion output by the steel strip tensioning actuator 36 into the linear motion of the connecting piece 35 in the second direction f by means of belt drive and screw drive. It should be noted that, of course, belt drive and screw drive may not be used, and in other embodiments, what can be adopted is worm gear drive or rack and pinion drive, etc., which is not limited herein.

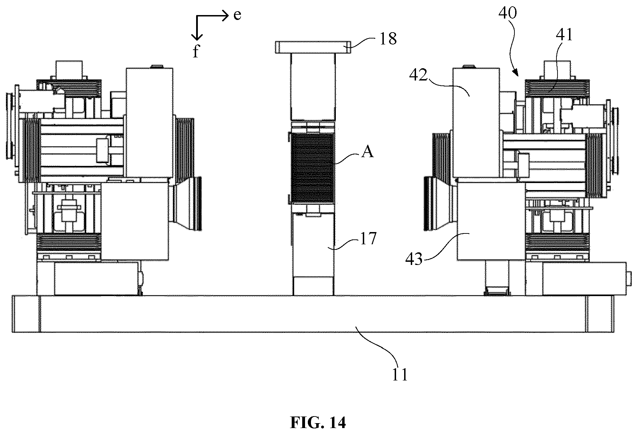

As shown in FIGS. 1-14, in some embodiments, two welding devices 40 are included, and they are respectively located on two sides of the placement position in the first direction e, so as to respectively weld the first end and the second end of the steel strip B to the lower endplate of the fuel cell stack A disposed at the placement position.

In a specific embodiment, each welding device 40 includes a movable base 41 and a welder 42, wherein the movable base 41 is disposed at the base 11, the welder 42 is connected to the movable base 41, and the movable base 41 is configured for driving the welder 42 to move along three directions (such as the first direction e, the second direction f, and the third direction g) perpendicular to each other, thereby enabling the welder 42 to perform accurate welding on the first end or the second end of the steel strip B. In this way, the arrangement of the movable base 41 makes the apparatus more adaptable to the welding of fuel cell stack A and steel strip B with different sizes and specifications. It should be noted that, the movable base 41 can adopt a three-axis servo moving mechanism in the prior art, as long as the welder 42 can be driven to adjust the position in three directions perpendicular to each other, which is not limited herein. Alternatively, the welder 42 may be a laser welder 42.

In a specific embodiment, the welding device 40 further includes a ranging sensor 16 mounted at the welder 42. The ranging sensor 16 is configured for detecting the distance between the welder 42 and the fuel cell stack, so as to accurately control the welder 42 to move to the welding position.

In this specification, various embodiments are described in a progressive manner, and each embodiment focuses on the differences from other embodiments, and the same and similar parts of various embodiments can be referred to each other.

The above description of the disclosed embodiments enables one person skilled in the art to achieve or apply the invention. Various modifications to those embodiments will be readily apparent to one skilled in the art, and the generic principles defined herein may be implemented in other embodiments without departing from the scope of the invention as defined by the claims.

## Claims

1. A steel strip packing apparatus for packing a fuel cell stack with a steel strip, the steel strip having a first end and a second end opposite to the first end, **characterized in that** the steel strip packing apparatus comprises:
a pressurization device (10) including a base (11) and a pressing board (12) disposed opposite to the base (11), the base (11) having a placement position for disposing the fuel cell stack, the pressing board (12) being configured for pressurizing the fuel cell stack disposed at the placement position;
a steel strip shaping device (20) disposed at the base (11) and configured for guiding the first end of the steel strip from one side of the fuel cell stack to the other side of the fuel cell stack along a first direction, and configured for bending the first end and the second end of the steel strip in a second direction perpendicular to the first direction;
the apparatus being **characterized by**
two steel strip tensioning devices (30) disposed at the base (11), located respectively on two sides of the placement position in the first direction, and configured for tensioning respectively the first end and the second end of the steel strip along the second direction; and
a welding device (40) configured for welding respectively the first end and the second end of the steel strip to the fuel cell stack.

2. The steel strip packing apparatus of claim 1, **characterized in that** the steel strip shaping device (20) comprises a steel strip threading mechanism (21) and a profiling mechanism (22) respectively located on two sides of the placement position in the first direction;
the steel strip threading mechanism (21) is configured for guiding the first end of the steel strip to one side of the fuel cell stack facing toward the profiling mechanism (22) so as to bend the first end of the steel strip in the second direction under the action of the profiling mechanism (22), and the steel strip threading mechanism (21) is further configured for bending the second end of the steel strip in the second direction.

3. The steel strip packing apparatus of claim 2, **characterized in that** the steel strip threading mechanism (21) comprises a mounting seat (211), an elevation seat (212) and a clamping assembly (213), the mounting seat (211) is disposed at the base (11), the elevation seat (212) is connected to the mounting seat (211) in a way that enables movement along the second direction, and the clamping assembly (213) is disposed at the elevation seat (212) for the steel strip to thread along the first direction and can clamp the steel strip.

4. The steel strip packing apparatus of claim 3, **characterized in that** the steel strip threading mechanism (21) further comprises a rotating actuator (216) disposed at the elevation seat (212), the clamping assembly (213) is disposed at a driving end of the rotating actuator (216), and the rotating actuator (216) is configured for driving the clamping assembly (213) to rotate around a rotating axis parallel to a third direction;
wherein, the third direction is perpendicular to the first direction and the second direction.

5. The steel strip packing apparatus of claim 3 or 4, **characterized in that** the steel strip threading mechanism (21) further comprises a first welding shield (215) disposed at the mounting seat (211), wherein the first welding shield (215) can move or rotate in a controlled manner, and can press the second end of the steel strip against the fuel cell stack during moving or rotating.

6. The steel strip packing apparatus of any one of claims 2 to 5, **characterized in that** the profiling mechanism (22) has a profiling passage with an inlet section for inserting the first end of the steel strip and an outlet section in communication with the inlet section, the inlet section extending along the first direction, and the outlet section extending along the second direction.

7. The steel strip packing apparatus of claim 6, **characterized in that** the inlet section is in communication with the outlet section via an arc-shaped transition.

8. The steel strip packing apparatus of claim 6 or 7, **characterized in that** the profiling mechanism (22) comprises a mount base as well as a first profiling member (222a) and a second profiling member (222b) which are oppositely disposed at the mount base, the mount base is disposed at the base, the first profiling member (222a) and the second profiling member (222b) can get close to or away from each other, and the profiling passage is formed when the first profiling member (222a) and the second profiling member (222b) get close to and dock with each other.

9. The steel strip packing apparatus of claim 8, **characterized in that** the profiling mechanism (22) further comprises a second welding shield (223) disposed at the mount base, the second welding shield (223) can move or rotate in a controlled manner, and can press the first end of the steel strip against the fuel cell stack during moving or rotating.

10. The steel strip packing apparatus of claim 8 or 9, **characterized in that** the profiling mechanism (22) further comprises a seat body (224) and a regulating mechanism (225), the mount base is movably connected to the seat body (224) along the first direction, and the regulating mechanism (225) is connected to the seat body (224) and the mount base for regulating a position of the mount base relative to the seat body (224) along the first direction.

11. The steel strip packing apparatus of any one of claims 1 to 10, **characterized in that** the steel strip tensioning device (30) comprises a fixed base (32), a mounting frame (33) and a steel strip tensioning mechanism (34);
the fixed base (32) is disposed on the base (11), and the mounting frame (33) is disposed on the fixed base (32) and can move in a controlled manner along the first direction relative to the fixed base (32);
the steel strip tensioning mechanism (34) is disposed at the mounting frame (33), can move in a controlled manner along the second direction relative to the mounting frame (33), and can grasp the first end or the second end bent in the second direction.

12. The steel strip packing apparatus of claim 11, **characterized in that** the steel strip tensioning mechanism (34) comprises a moving seat (341), a steel strip tensioning seat (342) and a drive assembly;
the moving seat (341) is disposed at the mounting frame (33) and is capable of reciprocating movement in a controlled manner relative to the mounting frame (33) along the second direction perpendicular to the first direction;
the steel strip tensioning seat (342) is connected to the moving seat (341) in a way that enables reciprocating movement along the first direction, and can lock or release the steel strip during reciprocating movement relative to the moving seat (341) along the first direction;
the drive assembly comprises a locking actuator (343), a first connecting rod (344) and a second connecting rod (345), the locking actuator (343) comprises a fixed end and a driving end which is retractable relative to the fixed end, the fixed end is hinged to the steel strip tensioning seat (342), the driving end is hinged to one end of the connecting rod and one end of the second connecting rod, and the other ends of the connecting rod and the second connecting rod are hinged to the moving seat (341) and the steel strip tensioning seat (342) respectively;
wherein, the retractable end comprises a locking position during extending and retracting relative to the fixed end, and when the retractable end is in the locking position, the first connecting rod (344) and the second connecting rod (345) drive the steel strip tensioning seat (342) to move along the first direction so as to lock the steel strip, and the first connecting rod (344) and the second connecting rod (345) are parallel to the first direction.

13. The steel strip packing apparatus of claim 12, **characterized in that** the retractable end further comprises a releasing position during extending and retracting relative to the fixed end, and when the retractable end is in the releasing position, the first connecting rod (344) and the second connecting rod (345) drive the steel strip tensioning seat (342) to move along the first direction so as to release the steel strip, and the first connecting rod (344) and the second connecting rod (345) are disposed at an angle.

14. The steel strip packing apparatus of claim 12 or 13, **characterized in that** one side of the steel strip tensioning seat (342) away from the drive assembly is connected with a steel strip plug, and the steel strip plug can be plugged into or pulled out of a plug hole of the steel strip during reciprocating movement of the steel strip tensioning seat (342) along the first direction.

15. The steel strip packing apparatus of claim 14, **characterized in that** the steel strip tensioning mechanism (34) further comprises a steel strip backup plate connected to the moving seat (341), and the steel strip backup plate is disposed on one side with a steel strip plug relative to the steel strip tensioning seat (342), and is provided with a mating hole for the steel strip plug to thread.

16. The steel strip packing apparatus of any one of claims 12 to 15, **characterized in that** the steel strip tensioning device (30) further comprises a translation actuator (38), and the translation actuator (38) is disposed on the fixed base (32), is in driving connection with the mounting frame (33), and is configured for driving the mounting frame (33) to move along the first direction.

17. The steel strip packing apparatus of claim 16, **characterized in that** the steel strip tensioning device (30) further comprises a locating mechanism (39) disposed at the fixed base (32), and the locating mechanism (39) can be controllably matched with the mounting frame (33) by location to prevent the mounting frame (33) from moving relative to the fixed base (32).

18. The steel strip packing apparatus of claim 17, **characterized in that** the locating mechanism (39) comprises a locating plug (391) and a locating actuator (392), the locating plug (391) is connected to the fixed base (32) in a way that enables reciprocating movement along the second direction, the mounting frame (33) is opened with a locating hole corresponding to the locating plug (391), the locating plug (391) can be plugged into or pulled out of the locating hole during reciprocating movement along the second direction, and the locating actuator (392) is disposed on the fixed base (32) and is in driving connection with the locating plug (391).

19. The steel strip packing apparatus of claim 18, **characterized in that** the locating mechanism (39) further comprises an eccentric shaft seat (393), the fixed base (32) is opened with a mounting hole, the eccentric shaft seat (393) is mounted in the mounting hole and has an eccentric shaft hole, and the locating plug (391) is slidably disposed in the eccentric shaft hole of the eccentric shaft seat (393).

20. The steel strip packing apparatus of any one of claims 12-15, **characterized in that** the steel strip tensioning device (30) further comprises a connecting piece (35), a tension sensor and a steel strip tensioning drive mechanism, the connecting piece (35) is connected to the mounting frame (33) in a way that enables reciprocating movement along the second direction, the moving seat (341) is connected to the connecting piece (35) through the tension sensor, the tension sensor is configured for detecting the tension applied to the steel strip when the steel strip tensioning mechanism (34) moves along the second direction, and the steel strip tensioning drive mechanism is disposed at the mounting frame (33) and is in driving connection with the connecting piece (35).

## Patentansprüche

1. Stahlbandverpackungsvorrichtung, die zum Verpacken eines elektrischen Stapels unter Verwendung eines Stahlbandes dient, wobei das Stahlband ein erstes Ende und ein dem ersten Ende gegenüberliegendes zweites Ende aufweist, **dadurch gekennzeichnet, dass** die Stahlbandverpackungsvorrichtung Folgendes umfasst:
eine Druckbeaufschlagungseinrichtung (10), umfassend eine Basis (11) und eine Druckplatte (12), die gegenüber der Basis (11) angeordnet ist, wobei die Basis (11) eine Platzierungsposition zur Aufnahme des elektrischen Stapels aufweist, wobei die Druckplatte (12) zum Druckbeaufschlagen des in der Platzierungsposition platzierten elektrischen Stapels ausgebildet ist;
eine Stahlbandformeinrichtung (20), die an der Basis (11) angeordnet ist und zum Führen des ersten Endes des Stahlbandes in einer ersten Richtung von einer Seite des elektrischen Stapels zur anderen Seite des elektrischen Stapels und zum Biegen des ersten Endes und des zweiten Endes des Stahlbandes in einer zweiten Richtung senkrecht zur ersten Richtung ausgebildet ist;
**dadurch gekennzeichnet, dass**
zwei Stahlbandzieheinrichtungen (30), die an der Basis (11) angeordnet sind und sich jeweils an beiden Seiten der Platzierungsposition in der ersten Richtung befinden, wobei die beiden Stahlbandzieheinrichtungen zum Spannen des ersten Endes bzw. des zweiten Endes des Stahlbandes in der zweiten Richtung ausgebildet sind; und
eine Schweißeinrichtung (40), die zum Schweißen des ersten Endes bzw. des zweiten Endes des Stahlbandes mit dem elektrischen Stapel ausgebildet ist.

2. Stahlbandverpackungsvorrichtung nach Anspruch 1, **dadurch gekennzeichnet, dass** die Stahlbandformeinrichtung (20) einen Stahlbandeinführmechanismus (21) und einen Profilierungsmechanismus (22) umfasst, die jeweils an beiden Seiten der Platzierungsposition in der ersten Richtung angeordnet sind,
wobei der Stahlbandeinführmechanismus (21) zum Führen des ersten Endes des Stahlbandes zu einer dem Profilierungsmechanismus (22) zugewandten Seite des elektrischen Stapels ausgebildet ist, sodass das erste Ende unter der Wirkung des Profilierungsmechanismus (22) in die zweite Richtung gebogen wird, wobei der Stahlbandeinführmechanismus (21) ferner zum Biegen des zweiten Endes des Stahlbandes in die zweite Richtung ausgebildet ist.

3. Stahlbandverpackungsvorrichtung nach Anspruch 2, **dadurch gekennzeichnet, dass** der Stahlbandeinführmechanismus (21) einen Montagesitz (211), einen Hubsitz (212) und eine Klemmanordnung (213) umfasst, wobei der Montagesitz (211) an der Basis (11) angeordnet ist, wobei der Hubsitz (212) beweglich mit dem Montagesitz (211) in der zweiten Richtung verbunden ist, wobei die Klemmanordnung (213) auf dem Hubsitz (212) angeordnet ist, um das Stahlband in der ersten Richtung zu hindurchführen, und in der Lage ist, das Stahlband zu klemmen.

4. Stahlbandverpackungsvorrichtung nach Anspruch 3, **dadurch gekennzeichnet, dass** der Stahlbandeinführmechanismus (21) ferner ein Drehantriebselement (216) umfasst, das auf dem Hubsitz (212) angeordnet ist, wobei die Klemmanordnung (213) am Antriebsende des Drehantriebselements (216) angeordnet ist, wobei das Drehantriebselement (216) zum Antreiben der Drehung der Klemmanordnung (213) um eine Drehachse parallel zu einer dritten Richtung ausgebildet ist,
wobei die dritte Richtung senkrecht zu der ersten Richtung und der zweiten Richtung verläuft.

5. Stahlbandverpackungsvorrichtung nach Anspruch 3 oder 4, **dadurch gekennzeichnet, dass** der Stahlbandeinführmechanismus (21) ferner eine erste Schweißschutzabdeckung (215) umfasst, die am Montagesitz (211) angeordnet ist, wobei sich die erste Schweißschutzabdeckung (215) steuerbar bewegt oder dreht, und in der Lage ist, das zweite Ende des Stahlbandes während der Bewegung oder Drehung gegen den elektrischen Stapel zu drücken.

6. Stahlbandverpackungsvorrichtung nach einem der Ansprüche 2 bis 5, **dadurch gekennzeichnet, dass** der Profilierungsmechanismus (22) einen Profilierungskanal aufweist, wobei der Profilierungskanal einen Einlassabschnitt zum Einführen des ersten Endes des Stahlbandes und einen Auslassabschnitt zum Verbinden mit dem Einlassabschnitt umfasst, wobei sich der Einlassabschnitt in der ersten Richtung erstreckt, wobei sich der Auslassabschnitt in der zweiten Richtung erstreckt.

7. Stahlbandverpackungsvorrichtung nach Anspruch 6, **dadurch gekennzeichnet, dass** der Einlassabschnitt kreisbogenförmig mit dem Auslassabschnitt übergeht.

8. Stahlbandverpackungsvorrichtung nach Anspruch 6 oder 7, **dadurch gekennzeichnet, dass** der Profilierungsmechanismus (22) eine Montagebasis, ein erstes Profilierungselement (222a) und ein zweites Profilierungselement (222b) umfasst, die einander gegenüberliegend an der Montagebasis angeordnet sind, wobei die Montagebasis an der Basis angeordnet ist, wobei das erste Profilierungselement (222a) und das zweite Profilierungselement (222b) in der Lage sind, sich einander zu nähern oder voneinander zu entfernen, und der Profilierungskanal gebildet wird, wenn sich das erste Profilierungselement (222a) und das zweite Profilierungselement (222b) einander nähern und andocken.

9. Stahlbandverpackungsvorrichtung nach Anspruch 8, **dadurch gekennzeichnet, dass** der Profilierungsmechanismus (22) ferner eine zweite Schweißschutzabdeckung (223) umfasst, die an der Montagebasis angeordnet ist, wobei sich die zweite Schweißschutzabdeckung (223) steuerbar bewegt oder dreht und in der Lage ist, das erste Ende des Stahlbandes während der Bewegung oder Drehung gegen den elektrischen Stapel zu drücken.

10. Stahlbandverpackungsvorrichtung nach Anspruch 8 oder 9, **dadurch gekennzeichnet, dass** der Profilierungsmechanismus (22) ferner einen Sitzkörper (224) und einen Einstellmechanismus (225) umfasst, wobei die Montagebasis beweglich mit dem Sitzkörper (224) in der ersten Richtung verbunden ist, wobei der Einstellmechanismus (225) mit dem Sitzkörper (224) und der Montagebasis verbunden ist, um die Position der Montagebasis relativ zum Sitzkörper (224) in der ersten Richtung einzustellen.

11. Stahlbandverpackungsvorrichtung nach einem der Ansprüche 1 bis 10, **dadurch gekennzeichnet, dass** die Stahlbandzieheinrichtung (30) eine Befestigungsbasis (32), einen Montagerahmen (33) und einen Stahlbandziehmechanismus (34) umfasst,
wobei die Befestigungsbasis (32) an der Basis (11) angeordnet ist, der Montagerahmen (33) an der Befestigungsbasis (32) angeordnet ist und sich in der ersten Richtung relativ zur Befestigungsbasis (32) steuerbar bewegt,
wobei der Stahlbandziehmechanismus (34) am Montagerahmen (33) angeordnet ist und sich in der zweiten Richtung relativ zum Montagerahmen (33) steuerbar bewegt, und der Stahlbandziehmechanismus in der Lage ist, das in die zweite Richtung gebogene erste oder zweite Ende zu klammen.

12. Stahlbandverpackungsvorrichtung nach Anspruch 11, **dadurch gekennzeichnet, dass** der Stahlbandziehmechanismus (34) einen Bewegungssitz (341), einen Stahlbandziehsitz (342) und eine Antriebsanordnung umfasst,
wobei der Bewegungssitz (341) am Montagerahmen (33) angeordnet ist und sich relativ zum Montagerahmen (33) in einer zweiten Richtung senkrecht zur ersten Richtung steuerbar hin- und herbewegt,
wobei der Stahlbandziehsitz (342) hin- und herbeweglich mit dem Bewegungssitz (341) in der ersten Richtung verbunden ist, und sich das Stahlband während der Hin- und Herbewegung in der ersten Richtung relativ zum Bewegungssitz (341) verriegeln oder freigeben lässt,
und wobei die Antriebsanordnung ein Verriegelungsantriebselement (343), ein erstes Gestänge (344) und ein zweites Gestänge (345) umfasst, wobei das Verriegelungsantriebselement (343) ein Feststellende und ein gegenüber dem Feststellende ein- und ausziehbares Antriebsende umfasst, wobei das Feststellende gelenkig mit dem Stahlbandziehsitz (342) verbunden ist, wobei das Antriebsende an einem Ende des ersten Gestänges und des zweiten Gestänges angelenkt ist, wobei die anderen Enden des ersten Gestänges und des zweiten Gestänges jeweils an dem Bewegungssitz (341) bzw. dem Stahlbandziehsitz (342) angelenkt sind,
wobei das Ein- und Ausziehende eine Verriegelungsposition beim Ein- und Ausziehen relativ zum Feststellende umfasst, wobei das erste Gestänge (344) und das zweite Gestänge (345) zum Bewegen des Stahlbandziehsitzes (342) in der ersten Richtung ausgebildet sind, um das Stahlband zu verriegeln, wenn sich das Ein- und Ausziehende in der Verriegelungsposition befindet, und das erste Gestänge (344) und das zweite Gestänge (345) parallel zur ersten Richtung verlaufen.

13. Stahlbandverpackungsvorrichtung nach Anspruch 12, **dadurch gekennzeichnet, dass** das Ein- und Ausziehende ferner eine Freigabeposition beim Ein- und Ausziehen relativ zum Feststellende umfasst, wobei das erste Gestänge (344) und das zweite Gestänge (345) zum Bewegen des Stahlbandziehsitzes (342) in der ersten Richtung ausgebildet sind, um das Stahlband zu verriegeln, wenn sich das Ein- und Ausziehende in der Freigabeposition befindet, und das erste Gestänge (344) und das zweite Gestänge (345) in einem Winkel angeordnet sind.

14. Stahlbandverpackungsvorrichtung nach Anspruch 12 oder 13, **dadurch gekennzeichnet, dass** die von der Antriebsanordnung abgewandte Seite des Stahlbandziehsitzes (342) mit einem Stahlbandriegel verbunden ist, wobei sich der Stahlbandriegel während der Hin- und Herbewegung des Stahlbandziehsitzes (342) in der ersten Richtung in ein Riegelloch des Stahlbandes einführen oder aus dem Riegelloch des Stahlbandes herausziehen lässt.

15. Stahlbandverpackungsvorrichtung nach Anspruch 14, **dadurch gekennzeichnet, dass** der Stahlbandziehmechanismus (34) ferner eine Stahlbandanlageplatte umfasst, die mit dem Bewegungssitz (341) verbunden ist, wobei die Stahlbandanlageplatte an einer Seite angeordnet ist, die den Stahlbandriegel gegenüber dem Stahlbandziehsitz (342) aufweist, und ein Passloch zum Einführen des Stahlbandriegels aufweist.

16. Stahlbandverpackungsvorrichtung nach einem der Ansprüche 12 bis 15, **dadurch gekennzeichnet, dass** die Stahlbandzieheinrichtung (30) ferner ein Translationsantriebselement (38) umfasst, wobei das Translationsantriebselement (38) an der Befestigungsbasis (32) angeordnet und übertragend mit dem Montagerahmen (33) verbunden ist, und das Translationsantriebselement zum Bewegen des Montagerahmens (33) in der ersten Richtung ausgebildet ist.

17. Stahlbandverpackungsvorrichtung nach Anspruch 16, **dadurch gekennzeichnet, dass** die Stahlbandzieheinrichtung (30) ferner einen Positionierungsmechanismus (39) umfasst, der an der Befestigungsbasis (32) angeordnet ist, wobei der Positionierungsmechanismus (39) steuerbar mit dem Montagerahmen (33) durch Positionierung zusammenwirkt, um eine Bewegung des Montagerahmens (33) relativ zur Befestigungsbasis (32) zu verhindern.

18. Stahlbandverpackungsvorrichtung nach Anspruch 17, **dadurch gekennzeichnet, dass** der Positionierungsmechanismus (39) einen Positionierungsriegel (391) und ein Positionierungsantriebselement (392) umfasst, wobei der Positionierungsriegel (391) hin- und herbeweglich mit der Befestigungsbasis (32) in der zweiten Richtung verbunden ist, der Montagerahmen (33) mit einem dem Positionierungsriegel (391) entsprechenden Positionierungsloch versehen ist, wobei sich der Positionierungsriegel (391) während der Hin- und Herbewegung in der zweiten Richtung in das Positionierungsloch einführen oder aus dem Positionierungsloch herausziehen lässt, wobei das Positionierungsantriebselement (392) an der Befestigungsbasis (32) angeordnet und übertragend mit dem Positionierungsriegel (391) verbunden ist.

19. Stahlbandverpackungsvorrichtung nach Anspruch 18, **dadurch gekennzeichnet, dass** der Positionierungsmechanismus (39) ferner einen Exzenterwellensitz (393) umfasst, wobei die Befestigungsbasis (32) mit einem Montageloch versehen ist, wobei der Exzenterwellensitz (393) im Montageloch montiert ist und ein Exzenterwellenloch aufweist, wobei der Positionierungsriegel (391) verschiebbar im Exzenterwellenloch des Exzenterwellensitzes (393) angeordnet ist.

20. Stahlbandverpackungsvorrichtung nach einem der Ansprüche 12 bis 15, **dadurch gekennzeichnet, dass** die Stahlbandzieheinrichtung (30) ferner ein Verbindungselement (35), einen Zugkraftsensor und einen Stahlbandziehantriebsmechanismus umfasst, wobei das Verbindungselement (35) hin- und herbeweglich mit dem Montagerahmen (33) in der zweiten Richtung verbunden ist, wobei der Bewegungssitz (341) über den Zugkraftsensor mit dem Verbindungselement verbunden ist, wobei der Zugkraftsensor zum Erfassen der auf das Stahlband ausgeübten Zugkraft während der Bewegung des Stahlbandziehmechanismus (34) in der zweiten Richtung ausgebildet ist, wobei der Stahlbandziehantriebsmechanismus am Montagerahmen (33) angeordnet und übertragend mit dem Verbindungselement (35) verbunden ist.

## Revendications

1. Appareil de conditionnement par bande d'acier destiné à conditionner une pile à combustible au moyen d'une bande d'acier, la bande d'acier présentant une première extrémité et une seconde extrémité opposée à la première extrémité, **caractérisé en ce que** l'appareil de conditionnement par bande d'acier comprend :
un dispositif de pressurisation (10) comprenant une base (11) et une planche de pressage (12) disposée opposée à la base (11), la base (11) présentant une position de placement pour disposer la pile à combustible, la planche de pressage (12) étant configurée pour pressuriser la pile à combustible disposée à la position de placement ;
un dispositif de formage de bande d'acier (20) disposé sur la base (11) et configuré pour guider la première extrémité de la bande d'acier d'un côté de la pile à combustible vers l'autre côté de la pile à combustible le long d'une première direction, et configuré pour cintrer la première extrémité et la seconde extrémité de la bande d'acier dans une seconde direction perpendiculaire à la première direction ;
**caractérisé en ce que**,
deux dispositifs de tension de bande d'acier (30) disposés sur la base (11), situés respectivement sur les deux côtés de la position de placement dans la première direction, et configurés pour tendre respectivement la première extrémité et la seconde extrémité de la bande d'acier le long de la seconde direction ; et
un dispositif de soudage (40) configuré pour souder respectivement la première extrémité et la seconde extrémité de la bande d'acier sur la pile à combustible.

2. Appareil de conditionnement par bande d'acier selon la revendication 1, **caractérisé en ce que** le dispositif de formage de bande d'acier (20) comprend un mécanisme d'enfilage de bande d'acier (21) et un mécanisme de profilage (22) situés respectivement sur les deux côtés de la position de placement dans la première direction;
le mécanisme d'enfilage de bande d'acier (21) est configuré pour guider la première extrémité de la bande d'acier vers un côté de la pile à combustiblefaisant face au mécanisme de profilage (22) afin de cintrer la première extrémité de la bande d'acier dans la seconde direction sous l'action du mécanisme de profilage (22) , et le mécanisme d'enfilage de bande d'acier (21) est en outre configuré pour cintrer la seconde extrémité de la bande d'acier dans la seconde direction.

3. Appareil de conditionnement par bande d'acier selon la revendication 2, **caractérisé en ce que** le mécanisme d'enfilage de bande d'acier (21) comprend un siège de montage (211), un siège élévateur (212) et un ensemble de serrage (213), le siège de montage (211) étant disposé sur la base (11), le siège élévateur (212) étant connecté au siège de montage (211) de manière à permettre un mouvement le long de la seconde direction, et l'ensemble de serrage (213) étant disposé sur le siège élévateur (212) pour permettre à la bande d'acier de s'enfiler le long de la première direction et pouvant serrer la bande d'acier.

4. Appareil de conditionnement par bande d'acier selon la revendication 3, **caractérisé en ce que** le mécanisme d'enfilage de bande d'acier (21) comprend en outre un actionneur rotatif (216) disposé sur le siège élévateur (212), l'ensemble de serrage (213) étant disposé à une extrémité motrice de l'actionneur rotatif (216), et l'actionneur rotatif (216)étant configuré pour entraîner l'ensemble de serrage (213) en rotation autour d'un axe de rotation parallèle à une troisième direction;
dans lequel la troisième direction étant perpendiculaire à la première direction et à la seconde direction.

5. Appareil de conditionnement par bande d'acier selon la revendication 3 ou 4, **caractérisé en ce que** le mécanisme d'enfilage de bande d'acier (21) comprend en outre un premier écran de soudage (215) disposé sur le siège de montage (211), dans lequel ledit premier écran de soudage (215) pouvant se déplacer ou tourner de manière contrôlée, et pouvant presser la seconde extrémité de la bande d'acier contre la pile à combustible pendant le déplacement ou la rotation.

6. Appareil de conditionnement par bande d'acier selon l'une quelconque des revendications 2 à 5, **caractérisé en ce que** le mécanisme de profilage (22) présente un passage de profilage avec une section d'entrée pour l'insertion de la première extrémité de la bande d'acier et une section de sortie en communication avec la section d'entrée, la section d'entrée s'étendant le long de la première direction, et la section de sortie s'étendant le long de la seconde direction.

7. Appareil de conditionnement par bande d'acier selon la revendication 6, **caractérisé en ce que** la section d'entrée communique avec la section de sortie par une transition en forme d'arc.

8. Appareil de conditionnement par bande d'acier selon la revendication 6 ou 7, **caractérisé en ce que** le mécanisme de profilage (22) comprend une base de montage ainsi qu'un premier élément de profilage (222a) et un second élément de profilage (222b) disposés en regard l'un de l'autre sur la base de montage, la base de montage étant disposée sur la base, le premier éléments de profilage (222a) et le second éléments de profilage (222b) pouvant se rapprocher ou s'éloigner l'un de l'autre, et le passage de profilage étant formé lorsque le premier éléments de profilage (222a) et le second éléments de profilage (222b) se rapprochent et s'accouplent l'un à l'autre.

9. Appareil de conditionnement par bande d'acier selon la revendication 8, **caractérisé en ce que** le mécanisme de profilage (22) comprend en outre un second écran de soudage (223) disposé sur la base de montage, le second écran de soudage (223) pouvant se déplacer ou tourner de manière contrôlée, et pouvant presser la première extrémité de la bande d'acier contre la pile à combustible pendant le déplacement ou la rotation.

10. Appareil de conditionnement par bande d'acier selon la revendication 8 ou 9, **caractérisé en ce que** le mécanisme de profilage (22) comprend en outre un corps de siège (224) et un mécanisme de réglage (225), la base de montage étant connectée de manière mobile au corps de siège (224) le long de la première direction, et le mécanisme de réglage (225) étant connecté au corps de siège (224) et à la base de montage pour régler une position de la base de montage par rapport au corps de siège (224) le long de la première direction.

11. Appareil de conditionnement par bande d'acier selon l'une quelconque des revendications 1 à 10, **caractérisé en ce que** le dispositif de tension de bande d'acier (30) comprend une base fixe (32), un châssis de montage (33) et un mécanisme de tension de bande d'acier (34);
la base fixe (32) est disposée sur la base (11), et le châssis de montage (33) est disposé sur la base fixe (32) et peut se déplacer de manière contrôlée le long de la première direction par rapport à la base fixe (32);
le mécanisme de tension de bande d'acier(34) est disposé sur le châssis de montage (33),
peut se déplacer de manière contrôlée le long de la seconde direction par rapport au châssis de montage (33), et peut saisir la première ou la seconde extrémité cintrée dans la seconde direction.

12. Appareil de conditionnement par bande d'acier selon la revendication 11, **caractérisé en ce que** le mécanisme de tension de bande d'acier (34) comprend un siège mobile (341), un siège de tension de bande d'acier (342) et un ensemble d'entraînement ;
le siège mobile (341) est disposé sur le châssis de montage (33) et est apte à un mouvement de va-et-vient contrôlé par rapport au châssis de montage (33) le long de la seconde direction perpendiculaire à la première direction ;
le siège de tension de bande d'acier (342) est connecté au siège mobile (341) de manière à permettre un mouvement de va-et-vient le long de la première direction, et peut verrouiller ou libérer la bande d'acier pendant le mouvement de va-et-vient par rapport au siège mobile (341) le long de la première direction ;
l'ensemble d'entraînement comprend un actionneur de verrouillage (343), une première bielle (344) et une seconde bielle (345), l'actionneur de verrouillage (343) comprenant une extrémité fixe et une extrémité motrice rétractable par rapport à l'extrémité fixe, l'extrémité fixe étant articulée au siège de tension de bande d'acier (342), l'extrémité motrice étant articulée à une extrémité de la première bielle et à une extrémité de la seconde bielle, et les autres extrémités de la première et de la seconde bielles étant articulées respectivement au siège mobile (341) et au siège de tension de bande d'acier (342);
dans lequel l'extrémité rétractable présente une position de verrouillage pendant l'extension et la rétraction par rapport à l'extrémité fixe, et lorsque l'extrémité rétractable est en position de verrouillage, la première bielle (344) et la seconde bielle (345) entraînent le siège de tension de bande d'acier à se déplacer le long de la première direction afin de verrouiller la bande d'acier, et la première bielle (344) et la seconde bielle (345) sont parallèles à la première direction.

13. Appareil de conditionnement par bande d'acier selon la revendication 12, **caractérisé en ce que** l'extrémité rétractable présente en outre une position de libération pendant l'extension et la rétraction par rapport à l'extrémité fixe, et lorsque l'extrémité rétractable est en position de libération, la première bielle (344) et la seconde bielle (345) entraînent le siège de tension de bande d'acier (342) à se déplacer le long de la première direction afin de libérer la bande d'acier, et la première bielle (344) et la seconde bielle (345) sont disposées selon un angle.

14. Appareil de conditionnement par bande d'acier selon la revendication 12 ou 13, **caractérisé en ce qu'**un côté du siège de tension de bande d'acier (342) éloigné de l'ensemble d'entraînement est connecté à une fiche de bande d'acier, et la fiche de bande d'acier peut être insérée ou retirée d'un trou de fiche de la bande d'acier pendant le mouvement de va-et-vient du siège de tension de bande d'acier (342) le long de la première direction.

15. Appareil de conditionnement par bande d'acier selon la revendication 14, **caractérisé en ce que** le mécanisme de tension de bande d'acier (34) comprend en outre une plaque de support de bande d'acier connectée au siège mobile (341), la plaque de support de bande d'acier étant disposée du côté de la fiche de bande d'acier par rapport au siège de tension de bande d'acier (342), et présentant un trou d'accouplement permettant à la fiche de bande d'acier de s'enfiler.

16. Appareil de conditionnement par bande d'acier selon l'une quelconque des revendications 12 à 15, **caractérisé en ce que** le dispositif de tension de bande d'acier (30) comprend en outre un actionneur de translation (38) disposé sur la base fixe (32), en liaison motrice avec le châssis de montage (33), et configuré pour entraîner le châssis de montage (33) à se déplacer le long de la première direction.

17. Appareil de conditionnement par bande d'acier selon la revendication 16, **caractérisé en ce que** le dispositif de tension de bande d'acier (30) comprend en outre un mécanisme de localisation (39) disposé sur la base fixe (32), et le mécanisme de localisation (39) peut être apparié de manière contrôlée avec le châssis de montage (33) par localisation afin d'empêcher le châssis de montage (33) de se déplacer par rapport à la base fixe (32).

18. Appareil de conditionnement par bande d'acier selon la revendication 17, **caractérisé en ce que** le mécanisme de localisation (39) comprend une fiche de localisation (391) et un actionneur de localisation (392), la fiche de localisation (391) étant connectée à la base fixe (32) de manière à permettre un mouvement de va-et-vient le long de la seconde direction, le châssis de montage (33) étant pourvu d'un trou de localisation correspondant à la fiche de localisation (391), la fiche de localisation (391) pouvant être insérée ou retirée du trou de localisation pendant le mouvement de va-et-vient le long de la seconde direction, et l'actionneur de localisation (392) étant disposé sur la base fixe (32) et en liaison motrice avec la fiche de localisation (391).

19. Appareil de conditionnement par bande d'acier selon la revendication 18, **caractérisé en ce que** le mécanisme de localisation (39) comprend en outre un siège d'arbre excentrique (393), la base fixe (32) étant pourvue d'un trou de montage, le siège d'arbre excentrique (393) étant monté dans le trou de montage et présentant un trou d'arbre excentrique, et la fiche de localisation (391) étant coulissante dans le trou d'arbre excentrique du siège d'arbre excentrique (393).

20. Appareil de conditionnement par bande d'acier selon l'une quelconque des revendications 12 à 15, **caractérisé en ce que** le dispositif de tension de bande d'acier (30) comprend en outre une pièce de liaison (35), un capteur de tension et un mécanisme d'entraînement de tension de bande d'acier, la pièce de liaison (35) étant connectée au châssis de montage (33) de manière à permettre un mouvement de va-et-vient le long de la seconde direction, le siège mobile (341) étant connecté à la pièce de liaison par le capteur de tension, le capteur de tension étant configuré pour détecter la tension appliquée à la bande d'acier lorsque le mécanisme de tension de bande d'acier (34) se déplace le long de la seconde direction, et le mécanisme d'entraînement de tension de bande d'acier étant disposé sur le châssis de montage (33) et en liaison motrice avec la pièce de liaison (35).
